# EUROPÄISCHE PATENTANMELDUNG

(11) **EP 4 311 931 A1**
(43) Veröffentlichungstag der Anmeldung: **31.01.2024**
(21) Anmeldenummer: 22020365.7
(22) Anmeldetag: 28.07.2022
(51) Int. Cl.: F03D 9/32, B60L 8/00, B64D 41/00

(54) **STROMERZEUGUNG DURCH NUTZUNG DER ENERGIE DES FAHR- UND FLUG-GEGENWINDES**

(71) Anmelder: Arkadi Strauß, 33330 Gütersloh (DE)
(72) Erfinder: Arkadi Strauß, 33330 Gütersloh (DE)

(57) **Zusammenfassung**

Die Anmeldung betrifft die Nutzung des Fahr- oder Flug-Gegenwinds in der Vorwärtsbewegung von Objekten, zum Beispiel von Zügen oder Flugzeugen, als Antriebselement zur Stromerzeugung.

## Beschreibung

Meine Erfindung stützt sich auf die Nutzung der Energie des Gegenwindes bei der Vorwärtsbewegung auf Land und in der Luft zum Antrieb von Generatoren zur Stromerzeugung.

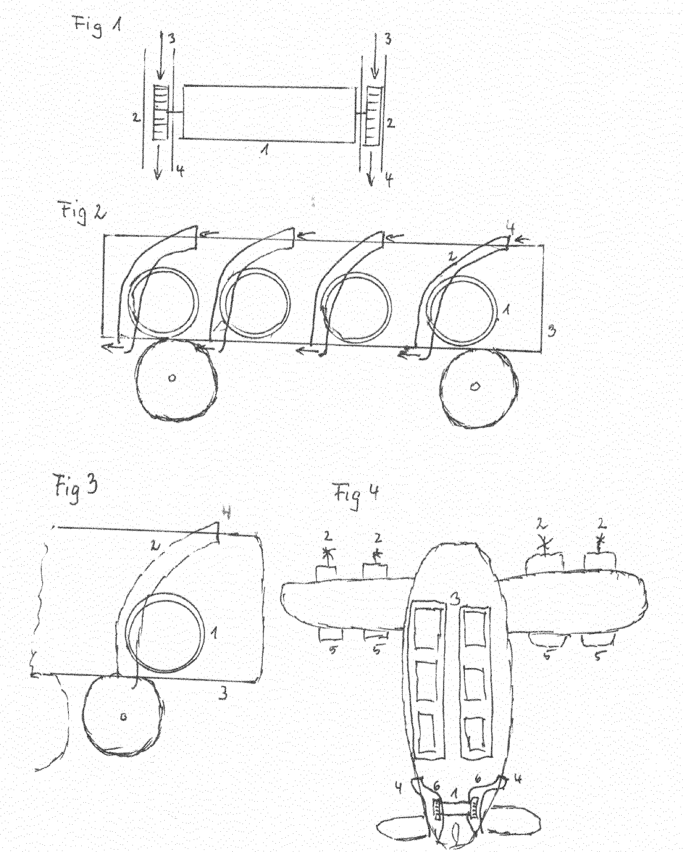

### Der Gegenwindgenerator (Fig. 1)

Der Gegenwindgenerator (Fig. 1) wird mit je einem Schaufelrad (Fig. 1 Nr. 2) an beiden Seiten des Generators (Fig. 1 Nr. 1) gebaut. Das hat den Vorteil, dass die Belastung der Achse und der Lager beidseitig gleichmäßig erfolgen und beidseitig Antriebskraft für die Rotation des Kollektors des Generators (Fig. 1Nr. 1) wirkt. Der von Außen durch eine Öffnung in der Außenwand (Fig. 2, Fig. 3, Fig. 4 Nr.4) einströmende Gegenwind wird durch zwei Strömungskanäle (Fig. 1 Nr. 3) zu den Schaufelrädern (Fig. 1 Nr. 2) geführt und durch die Strömungskanäle (Fig. 1 Nr. 4) wieder nach Außerhalb des Fahrzeuges / des Flugzeuges geführt. Ein nennenswerter Nachteil durch den Gegenwind tritt nicht auf, da in dem Strömungskanal lediglich das rotierende Schaufelrad die Strömung "leicht behindert".

Die Kraft und die daraus gewonnene Energie des Gegenwindes hängt von der Geschwindigkeit des Vortriebes und dem dadurch erzeugten Luftdruck ab, der auf die Schaufeln des Generators zur Stromerzeugung einwirkt. Für eine kontinuierliche Betriebsleistung des Generators ist eine Regulierung des Strömungswindes notwendig. Die zu jeder Anwendungsart angepasste Größe und Stärke der Generatoren und einem Grundpotential an Akku/ Batterieleistung, ist eine Selbstversorgung mit Energie zum Betrieb und Laden gegeben.

Die Möglichkeit zur Stromerzeugung durch die natürliche, sich aus der Vorwärtsbewegung ergebenden Gegenwindkräfte, sind nutzbar für:
1. Schienenfahrzeuge der Deutschen Bundesbahn.
1.1. Zur reinen Stromerzeugung als Produzent und Lieferant von Ökostrom.
1.2. Für Züge, die durch Strom aus der Oberleitung versorgt werden.
1.3. Zur Selbstversorgung mit Energie bei Akku/Batterie betriebenen Zügen.
1.4. Ersatz von Dieselloks durch E-Loks, die mit Akku/Batterien angetrieben werden.
2. Flugzeuge für den zivilen Luftverkehr und Transportflugzeuge.
2.1. Einsatz des Gegenwindgenerators zum Betrieb des E-Flugzeuges und Laden der Akkus/Batterien an Land und im Flug bei der Vorwärtsbewegung

### 1. Schienenfahrzeuge der Deutschen Bundesbahn

Die Nutzung meiner Erfindung durch die DB wird zu Folge haben, dass eine bisher nicht genutzte natürliche Naturerscheinung - der Gegenwind in der Vorwärtsbewegung - die Probleme der Energieknappheit wesentlich, ökologisch sauber und CO2 frei, verbessern wird.

Die Art der Stromgewinnung durch Gegenwind in der Vorwärtsbewegung ist eine Weltneuheit.

### Zu 1.1 Zur reinen Stromerzeugung als Produzent und Lieferant von Ökostrom

Die Infrastruktur der stromführenden Oberleitungen der Deutschen Bundesbahn sind flächendeckend über ganz Deutschland verteilt. Es bietet sich die einmalig gute Gelegenheit dieses Netz der Oberleitungen zur kommerziellen und zur eigenen Nutzung in großem Umfang ökologisch reinen Strom zu produzieren und zu verwerten. Da im ganzen Bundesgebiet Stationen zur Abnahme von Verbrauchsstrom für elektrisch angetriebene Fahrzeuge sind, kann die DB als Stromproduzent ,an diesen Stellen auch den durch meine Erfindung produzierten Strom in das öffentliche Netz einspeisen.

Eine einmalige Gelegenheit in kürzester Zeit meine Erfindung zu verwirklichen und damit die Stromproduktion auf lange Sicht in der Bundesrepublik zu erhöhen und zu stabilisieren und zum Teil andere "nicht saubere" Energiegewinnung ab zubauen.

Zu diesem Zweck wird ein Generatorwagen (Fig. 2 ) gebaut, der als erster Wagen z.B. vor einen Güterzug mit elektrischen Antrieb gekoppelt wird. Der Generatorwagen wird so hoch gebaut, dass der Lockführer immer einen prüfenden Überblick auf die Strecke hat. Die Abgabe des erzeugten Stromes kann entweder über einen eigenen Strombügel erfolgen, als auch über die E-Lock an die Oberleitung abgegeben werden. Da die Güterzüge überwiegend auf langen Strecken unterwegs sind, erfolgt hier eine permanente hohe Stromerzeugung.

Mit diesen Generatorwagen vor allen Güterzügen gekoppelt, ist mit einer überdimensional großen Stromerzeugung zu rechnen.

Der Generatorwagen kann, ausgestattet mit einem eigenen E-Antriebsmotor, auch von einem Zugführer oder auch autonom, gesteuert über die an der Strecke vorhandenen Leitstationen, zur Stromerzeugung betrieben werden.

Die Größe und Leistungsstärke des Generators richten sich nach der jeweiligen Aufgabenstellung. Der Generatorwagen ( Fig. 2 ) zur reinen Stromerzeugung darf nur so viel Leistung der Generatoren bereitstellen, wie die Aufnahmekapazität der Stromoberleitung ausgelegt ist. Die Anzahl 4 Generatoren wie in der Fig. 2 dargestellt ist daher nicht zwingend und dient lediglich zu Darstellung der Nutzungsmöglichkeit meiner Erfindung.

### 1.2 Für Züge die durch Strom aus der Oberleitung versorgt werden.

Hier bietet sich an, durch den Einbau eines Generators (Fig. 1, Fig. 3 Nr. 1) den eigenen Stromverbrauch durch Stromerzeugung mit dem Gegenwindgenerator (Fig. 1) zu egalisieren ggf. noch Reststrom an das Netz zu leiten.

### 1.3 Zur Selbstversorgung mit Energie bei Akku/Batterie betriebene Züge.

Die neuen Züge die den Elektroantriebsmotor über eingebaute Akkus/ Batterien versorgen, werden bei Bedarf, wenn nicht mehr genügend Energie aus den Akkus/Batterien für den E-Motor zur Verfügung steht, über den Strombügel an der Stromoberleitung mit Energie zur Weiterfahrt und zum Aufladen der Akkus/Batterien angeschlossen. Ist der Ladevorgang abgeschlossen, kann der E-Zug auch auf Strecken ohne Oberleitungen bis zur nächsten Ladesituation eingesetzt werden.

Meine Erfindung ist solch einen E-Zug mit einem Gegenwindgenerator (Fig. 1) in der Form der Zeichnung (Fig. 3) auszustatten.

Mit einem auf die Anforderungen angepassten Generator ist der E-Zug frei von jeder externen Aufladung und wäre grundsätzlich für Strecken ohne Oberleitung einzusetzen.

### 1.4. Ersatz von Dieselloks durch E-Locks, die mit Energie durch Akku/Batterie angetrieben werden.

Für den Fernverkehr über weite Strecken sollte von Dieselloks auf E-Loks umgerüstet werden. Die Voraussetzung für die Nutzung des Gegenwindgenerators (Fig. 1) ist der Antrieb der E-Lock mit E-Motoren, die durch die Energie der Akkus/Batterien angetrieben werden. Durch den Gegenwindgenerator (Fig. 1) wird permanent der Strom erzeugt, der den E-Motor zum Antrieb und die Akkus/Batterien mit Strom zum Laden versorgt. Diese E-Loks sind frei von jeglicher Abhängigkeit und können auf superlange Strecken eingesetzt werden.

### 2. Flugzeuge für den zivilen Luftverkehr und Transportflugzeuge

Die bisherige Nutzung der Flugzeuge für den zivilen Luftverkehr und der Betrieb der Transportflugzeuge mit all den schädlichen "Nebenwirkungen" wird von allen Seiten als nicht veränderbar abgetan. Selbst die breite Masse der Nutzer, die immer mehr diese Verkehrsmittel nutzen, nehmen die Umweltbelastung als normales Ereignis in Kauf.

Die bisherige Antriebsart mit Kerosin als Treibstoff belastet die Umwelt in großem Maße und ist obendrein durch die hohe Explosionsgefahr ein ständiges Risiko im Luftverkehr. Auch die Herstellung von Kerosin verbraucht Grundstoffe, die für andere Anwendungen sinnvoller eigesetzt werden können.

Der Einsatz von Kerosin wird durch meine Erfindung abgelöst.

Der Stand der Technik mit E-Motoren im Flugzeugbau:
Gebaut und getestet werden bisher mit Elektromotor und Propellerantrieb ausgestattete kleine Flugzeuge. Die Energie für den E-Motor kommt aus den im Flugzeug verbauten Akkus/Batterien. Die Aufladung der Akkus/Batterien erfolgt an Ladestationen am Boden. Die bisherige Reichweite wird mit ca. 1000 Kilometern angegeben. Die Möglichkeit größere Reichweiten zu erzielen wird mit Leistungssteigerung der Akkus/Batterien versucht.

### 2.1. Einsatz des Gegenwindgenerators zum Betrieb des E-Flugzeuges und zum Laden der Akkus/Batterien

Meine Erfindung ist der Bau von Elektroflugzeugen (Fig. 4), die mit Propeller (Fig. 4 Nr. 2) durch Elektromotoren (Fig. 4 Nr. 5) angetrieben, werden. Die zum Startvorgang benötigte Energie kommt aus dem Akkus/Batterien (Fig. 4 Nr. 3) die aus zwei unabhängigen, mehrere Sektoren beinhaltende, Akkus/ Batterien bestehen. Im Heck des Flugzeuges (Fig. 4) ist ein Gegenwindgenerator (Fig. 4 Nr. 1) eingebaut. Angetrieben zur Stromproduktion wird der Generator (Fig. 4 Nr. 1) durch den Gegenwind (Fig. 1 Nr. 3) der durch die Öffnung (Fig.4 Nr. 4) im Rumpf des Flugzeuges und durch den Strömungskanal (Fig. 4 Nr. 6) zu den beidseitigen Schaufeln (Fig. 1 Nr. 2 ) des Gegenwindgenerators (Fig. 4 Nr. 1) geleitet wird. Da die Startgeschwindigkeit zum Abheben des Flugzeuges (Fig. 4) ca. 250 km/h erreicht, erzeugt der Gegenwindgenerator (Fig. 4 Nr. 1) bereits die Energie, die ein Umschalten von Batterieversorgung auf Generatorstrom möglich macht. Für den weiteren Flugverlauf kommt die Energie nur noch von dem Generator (Fig. 4 Nr. 1) durch den Gegenwind erzeugten Strom. Für den Landevorgang wird die benötigte Energie dann wieder nur aus den geladenen Akkus/Batterien entnommen. Das Laden der Akkus/Batterien am Boden entfällt, da diese während des Fluges geladen werden.

Das E-Flugzeug führt kein Treibstoff mit sich, versorgt sich selbst durch den Gegenwindgenerator mit der nötigen Energie und bringt eine ökologisch positive Umweltbilanz mit sich. Die weiteren umweltschädlichen Aspekte von Kerosin sind: In kritischen Fällen wird Kerosin an die Umwelt abgegeben, Umweltbelastung durch die Abgashitze und die Abgase selbst, die Brandgefahr durch Treibstoff bei Zwischenfällen.

Das in der Zeichnung (Fig. 4) abgebildete Flugzeug mit vier E-Motoren kann, je nach Aufgabenstellung an das Flugzeug, auch mit nur zwei E-Motoren ausgestattet sein.

Der in der Zeichnung (Fig. 4) im Heck des Flugzeuges angebrachte Gegenstromgenerator (Fig. 4 Nr. 1) muss nicht zwingend im Heck verbaut werden. Sollten technische oder andere Gründe diesen Gegenstromgenerator im Bug verbauen wollen oder müssen, ist der Gegenstromgenerator (Fig1) und die Wirkung der Erfindung damit nicht berührt.

Die Zeichnungen zeigen nur Erfindung und Einsatzmöglichkeit. Die praktische technische Umsetzung der Erfindung und die Fertigung entsprechender technischen Zeichnungen obliegen den Ingenieuren und Technikern, die meine Erfindung umsetzen.

Für die Nutzung der Energie des Gegenwindes bei der Vorwärtsbewegung können noch andere Objekte diese Erfindung nutzen, die da z.B. wären:
E-Autos der jetzigen Generation die den Generator zur Erzeugung von zusätzlicher Elektroenergie zur wesentlichen Vergrößerung der Reichweite auf größeren Fahrstrecken nutzen können.

Den Auto-Rennsport vom Verbrenner-Motor auf E-Motor um zustellen und durch den Einbau des Generators Energie zu erzeugen, um die ständig benötigte Volllast des Akkus/Batterie zu erreichen. Gleichzeitig gestaltet sich durch die Verwendung vom E-Motor der "neue" Rennsport zu ökologisch sauberen, Co2 freien Veranstaltungen. Da diese Veranstaltungen das ganze Jahr hindurch sehr aktiv betrieben werden, ist mit einer hohen Verminderung von CO2 und anderen Umweltbelastungen zu rechnen.

### Stromerzeugung durch Nutzung der Energie des Fahr.- und Flug-Gegenwindes

### Bezugszeichenliste

- Fig. 1: Generator
1 Generator
2 Schaufelrad
3 Gegenwindeintritt
4 Gegenwindaustritt
- Fig. 2: Generatorenwagen
1. Generator
2. Gegenwindströmungskanal
3. Generatorwagen
4. Gegenwindeintrittsöffnung
- Fig. 3: Frontteil E-Lok E-Triebwagen
1. Generator
2. Gegenwindströmungskanal
3. Frontteil E-Lok E-Triebwagen
4. Gegenwindeintrittsöffnung
- Fig. 4: E-Flugzeug
1. Generator
2. Propeller
3. Akkus/Batterien
4. Gegenwindeintrittsöffnung
5. E-Motoren
6. Gegenwindströmungskanal

## Patentansprüche

1. Der Schutzanspruch 1 ist **dadurch gekennzeichnet, dass**
der Fahr.- und Flug-Gegenwind in der Vorwärtsbewegung von Objekten als Energieelement zur Stromerzeugung genutzt wird.

2. Der Schutzanspruch 2 ist **dadurch gekennzeichnet, dass**
die Energie des Fahr.- und Flug-Gegenwind in der Vorwärtsbewegung von Objekten zum Antrieb eines Generators (Fig. 1) zur Stromerzeugung genutzt wird.

3. Der Schutzanspruch 3 ist **dadurch gekennzeichnet, dass**
der Generator (Fig. 1)
in das Objekt Generatorwagen (Fig. 2),
in das Objekt E-Lokomotiven / E-Triebwerke (Fig. 3) und
in das Objekt Flugzeuge (Fig. 4)
zur Stromerzeugung aus der Energie des Gegenwind in der Vorwärtsbewegung verbaut und genutzt wird.

4. Der Schutzanspruch 4 ist **dadurch gekennzeichnet, dass**
für alle Objekte die in der Vorwärtsbewegung Energie aus dem Gegenwind erzeugen und einen Generator zur Stromproduktion verwenden könnten.

## Geänderte Patentansprüche

### Geänderte Patentansprüche gemäss Regel 137(2) EPÜ.

1. Der Schutzanspruch 1 ist **dadurch gekennzeichnet,**
**dass** ein Generator zur Stromerzeugung durch Nutzung der Energie des Fahr.- und Flug-Gegenwindes zum Einsatz kommt, der auf beiden Seiten der Achse mit je einem Schaufelrad versehen ist Der Generator erzeugt Strom durch den Gegenwind bei der Vorwärtsbewegung von Objekten Dieser Gegenwind wird durch zwei Öffnungen an der Außenseite des Objektes mit dem Strömungskanal an beide Seiten an die Schaufelräder geführt, die den Kollektor des Generator in Rotation versetzen. Auf kurzem Weg wird der Strömungswind hinter den Schaufelrädern an der Außenwand des Objektes nach Außen geführt.

2. Der Schutzanspruch 2 ist **dadurch gekennzeichnet,**
**dass** der Generator nach Schutzanspruch 1 in dem Objekt E-Flugzeug verbaut wird.

3. Der Schutzanspruch 3 ist **dadurch gekennzeichnet,**
**dass** der Generator nach Schutzanspruch 1 in den Objekten E-Lokomotive / E-Zug, mit Anbindung an die stromführende Oberleitung, unmittelbar hinter den Führerstand verbaut wird.

4. Der Schutzanspruch 4 ist **dadurch gekennzeichnet,**
**dass** der Generator nach Schutzanspruch 1 in das Objekt E-Zug, der mit verbauten Batterien zum Antrieb ausgestattet ist, unmittelbar hinter den Führerstand verbaut wird.

5. Der Schutzanspruch 5 ist **dadurch gekennzeichnet,**
**dass** der Generator nach Schutzanspruch 1 in das Objekt Diesellok unmittelbar hinter den Führerstand verbaut wird. Für den Betrieb als E-Lok werden die weiteren notwendigen Voraussetzungen wie E-Motor, Batterien, nachgerüstet und sind nicht beschrieben.

6. Der Schutzanspruch 6 ist **dadurch gekennzeichnet,**
**dass** der Generator nach Schutzanspruch 1 in mehrfacher Ausführung in eine E-Lok mit Anbindung an die stromführende Oberleitung verbaut wird. Diese Version dient der reinen Stromgewinnung mit Abgabe des Stromes an die vorhandenen Oberleitungen.
